# EUROPÄISCHE PATENTANMELDUNG

(11) **EP 1 637 972 A1**
(43) Veröffentlichungstag der Anmeldung: **22.03.2006**
(21) Anmeldenummer: 05018723.6
(22) Anmeldetag: 29.08.2005
(51) Int. Cl.: G06F 1/20

(54) **Computersystem**

(30) Priorität: 21.09.2004 DE 102004045694
(71) Anmelder: Fujitsu Siemens Computers GmbH, 80807 München (DE)
(72) Erfinder: Fietz, Ralf-Peter, 33104 Paderborn (DE); Koukal, Ernst, 82362 Weilheim (DE)
(74) Vertreter: Epping - Hermann - Fischer

(57) **Zusammenfassung**

Die Erfindung betrifft ein Computersystem mit mehreren Prozessoren. Wird das Computersystem in einer sogenannten Minderbestückung betrieben, d.h. es sind nicht alle für die Prozessoren (3) vorgesehenen Steckplätze (2a, 2b) belegt, so werden erfindungsgemäß die nicht belegten Steckplätze mit einem CPU-Dummy (5) versehen, welcher einen für die Kühlluftströmung äquivalenten Strömungswiderstand im Vergleich zu einem Prozessor (3) mit einem darauf angeordneten Kühlkörper (4) darstellt.

## Beschreibung

Die Erfindung betrifft ein Computersystem mit Steckplätzen für Prozessoren, auf denen jeweils Kühlkörper angeordnet sind.

Die neuen Generationen von Prozessoren bei Computersystemen haben eine wesentlich höhere Verlustleistung als die Prozessoren früherer Generationen.

Gerade bei Mehrprozessorsystemen muss daher die Kühlung exakt auf das Computersystem abgestimmt sein, um die infolge der Verlustleistung von den Prozessoren abgegebene Wärme ausreichend abführen zu können.

Bei der Anpassung der Kühlung an ein Computersystem besteht insbesondere bei Mehrprozessorsystemen das Problem, dass diese oft in Minderbestückung betrieben werden. Ausgelegt ist die Kühlung jedoch stets auf eine Vollbestückung, da hier die meiste Abwärme entsteht.

Sind in einem Computersystem jedoch nicht sämtliche Prozessoren mit darauf angeordneten Kühlkörper eingesteckt, so ändern sich die Strömungsverhältnisse innerhalb des Computersystems wesentlich. An denjenigen Stellen, an welchen kein Prozessor mit aufgesetztem Kühlkörper eingesteckt ist, kann der Kühlluftstrom ungehindert vorbeiströmen und daneben angeordnete Kühlkörper werden wesentlich weniger durchströmt, wie bei einer Vollbestückung.

Bisher ist es bekannt, speziell angepasste Luftleithauben zu verwenden bzw. in Luftleithauben Strömungssperren vorzusehen, welche dann bei einer nachträglichen Bestückung herausgebrochen werden. Wird jedoch im Nachhinein das System umgerüstet, so dass eine Minderbestückung entsteht, so kann die herausgebrochene Strömungssperre nicht mehr eingesetzt werden. Generell ist die Verwendung von einem zusätzlichen Element wie z.B. einer Luftleithaube immer auch von der Umgebung innerhalb des Computersystems stark abhängig, so dass nahezu jede Luftleithaube eine Speziallösung für ein bestimmtes System darstellt.

Der Erfindung liegt daher die Aufgabe zugrunde, für ein Computersystem mit Steckplätzen für mehrere Prozessoren eine Lösung aufzuzeigen, mit der auch bei einer Minderbestückung, die für die Vollbestückung des Systems geplante Kühlluftströmung erzielt werden kann.

Diese Aufgabe wird erfindungsgemäß dadurch gelöst, dass diejenigen Steckplätze, in die kein Prozessor mit darauf angeordneten Kühlkörper eingesteckt ist, ein CPU-Dummy eingesteckt ist, welcher für die Kühlluftströmung im Vergleich zu einem Prozessor mit darauf angeordneten Kühlkörper einen äquivalenten Strömungs-Widerstand darstellt.

Durch die Verwendung eines sogenannten CPU-Dummys, welcher sehr günstig aus Kunststoff hergestellt sein kann, wird mit geringstem Aufwand die für das komplette System ausgelegte und berechnete Kühlluftführung erreicht.

Auch bei einem Hochrüsten oder Abrüsten des Systems muss der CPU-Dummy lediglich aus dem Steckplatz entnommen bzw. beim Abrüsten wieder in den Steckplatz eingesteckt werden, um die optimierte Kühlluftströmung im Gesamtsystem zu erzielen. Des weiteren ist vorteilhaft, den CPU-Dummy so auszugestalten, dass dieser einen im Steckplatz angeordneten CPU-Sockel abdeckt und diesen vor Beschädigung und Verschmutzung schützt.

Somit sind gleichzeitig die hochempfindlichen CPU-Steckplätze auch bei einer Nichtbestückung geschützt, so dass bei einer späteren Hochrüstung keinerlei Beschädigungen des Steckplatzes zu erwarten sind.

Des weiteren ist es vorteilhaft, den CPU-Dummy mechanisch voll kompatibel zur Umgebung zu gestalten. Dies bedeutet, dass dieser so ausgeprägt ist, dass er ohne Zusatzaufwand anstelle eines Prozessors mit Kühlkörper montiert werden kann.

Günstig ist es auch, die Montage möglichst einfach zu gestalten, d.h. ohne Schrauben, nur durch ein Schnappen oder Klemmen.

Gemäß einer weiteren bevorzugten Ausführungsform ist der CPU-Dummy auch spiegel- und punktsymmetrisch ausgebildet. Dies hat den Vorteil, dass dieser nicht falsch montiert werden kann, da es durch die Spiegel- bzw. Punktsymmetrie egal ist, ob dieser um 180° versetzten in den Steckplatz eingesteckt wird oder nicht. Alternativ oder zusätzlich können weitere Sicherheitsmaßnahmen zur Verhinderung einer Falschmontage, z.B. durch Kennzeichnung oder Codierung beim CPU-Dummy vorgesehen sein.

Günstigerweise ist der CPU-Dummy als Spritzgussteil aus Kunststoff hergestellt und wird bei der Montage nicht bleibend verändert, so dass dieser auch nach einer Demontage stets wieder verwendbar ist.

In einer vorteilhaften Weiterbildung ist der CPU-Dummy in der Höhe einstellbar. Dies kann z.B. über Folienscharniere oder über einen Schieber oder auch über Sollbruchstellen oder Sollknickstellen, an denen durch Ausbrechen oder Abknicken die Höhe eingestellt werden, realisiert sein.

Die Einstellbarkeit der Höhe des CPU-Dummys hat den Vorteil, dass der CPU-Dummy an die exakte Höhe der in dem System verwendeten Prozessoren mit Kühlkörpern angepasst werden kann. Insbesondere die Kühlkörper können verschiedene Höhen haben, so dass eine gewisse Flexibilität des CPU-Dummys bezüglich der Höhenanpassung von Vorteil ist.

Nachfolgend wird anhand eines in den Figuren dargestellten Ausführungsbeispieles die Erfindung näher erläutert. In den Figuren zeigen:
- Figur 1: einen Ausschnitt aus einem Mehrprozessorsystem in Schrägansicht,
- Figur 2: das System gemäß Figur 1 mit Luftleithaube,
- Figur 3: eine Schrägansicht des CPU-Dummys von oben,
- Figur 4: eine Schrägansicht des CPU-Dummys von unten, und
- Figur 5: die Ansicht gemäß Figur 3 mit einer in der Höhe verstellbaren Mittelwand.

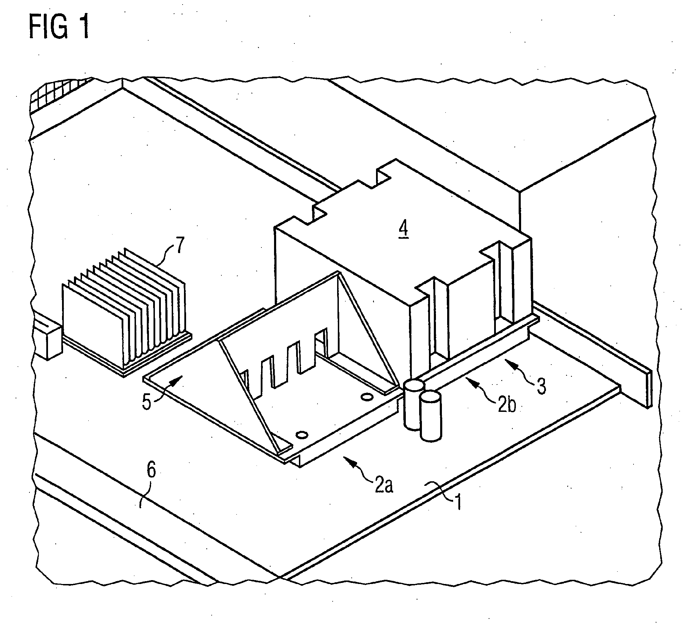

Figur 1 zeigt einen Ausschnitt aus einem Computersystem in Schrägansicht. Das Computersystem weist einen Motherboard 1 auf, auf welchem Steckplätze 2a und 2b für Prozessoren 3 vorgesehen sind. Nur im Steckplatz 2b ist ein Prozessor 3 mit einem darauf angeordneten Kühlkörper 4 eingesteckt. Im Steckplatz 2a ist hingegen ein CPU-Dummy 5 eingesteckt, welcher in seiner äußeren Form so aufgebaut ist, dass er einen für die Kühlluftströmung äquivalenten Widerstand wie der Prozessor 3 und der Kühlkörper 4 darstellt. Der Prozessor 3 ist im Steckplatz 2b unter dem Kühlkörper 4 angeordnet und nicht zu sehen.

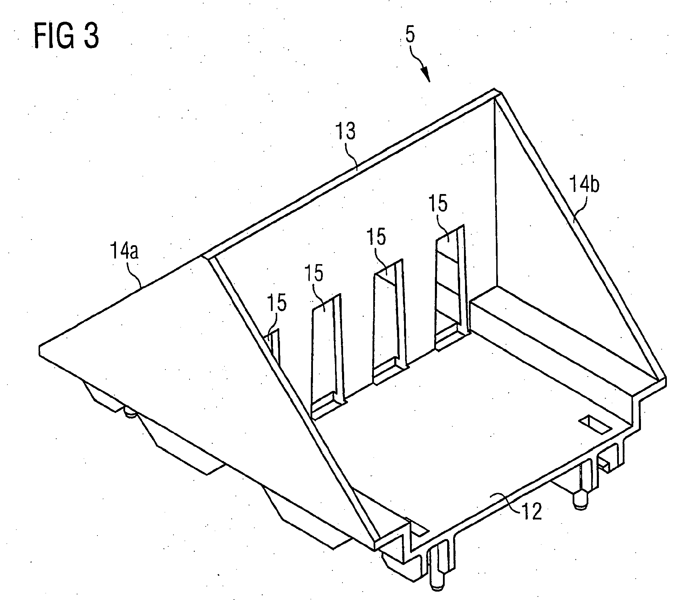

Der CPU-Dummy 5 wird in den Figuren 3 bis 5 noch im Detail näher erläutert.

Computersysteme mit Steckplätzen 2a, 2b für mehrere Prozessoren sind in der Regel in Einschüben 6 angeordnet, welche in Racks oder Serverschränken aufgenommen sind. In Figur 1 ist nur ein Teil der Seitenwandung des Einschubes 6 zu sehen.

Hinter dem CPU-Dummy 5 ist noch ein weiterer Kühlkörper 7 für ein weiteres elektronisches Bauteil auf dem Motherboard 1 angeordnet.

In einem Mehrprozessorsystem ist die Kühlluftströmung stets auf die Vollbestückung der Steckplätze 2a, 2b jeweils mit Prozessor 3 und Kühlkörper 4 hin ausgelegt und optimiert. Wäre der Steckplatz 2a aufgrund der Minderbestückung eben nicht mehr mit einem Prozessor 3 und Kühlkörper 4 versehen, so würde der Kühlluftstrom, welcher in der Regel vorn in den Einschub 6 eintritt und nach hinten wieder austritt, ungehindert über den Steckplatz 2a streichen können und der Kühlkörper 7 wäre wesentlich stärker von dem Kühlluftstrom durchströmt als der Kühlkörper 4 des Prozessors 3 im Steckplatz 2b.

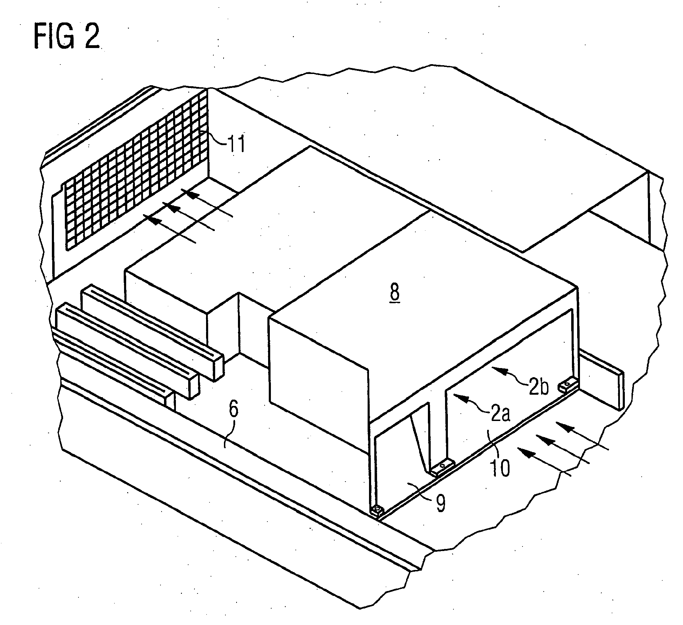

Figur 2 zeigt einen vergrößerten Ausschnitt des Einschubes 6 gemäß Figur 1, wobei über die Steckplätze 2a und 2b eine Luftleithaube 8 gestülpt ist. Die Luftleithaube 8 weist lufteingangsseitig zwei Öffnungen 9, 10 auf, über welche der Luftstrom (durch Pfeile symbolisch dargestellt) eintreten kann und an der Rückseite über eine weitere dieser Darstellung nicht erkennbaren Öffnung wieder austreten kann. An der Rückseite des Einschubes 6 ist ein Gitter 11 vorgesehen, über welches der Luftstrom nach hinten aus dem Einschub 6 wieder austreten kann.

Insbesondere auch in der Zusammenwirkung mit der Luftleithaube 8 ist es offensichtlich, dass wenn der Steckplatz 2a nicht bestückt ist, nahezu der gesamte Kühlluftstrom nur über diesen Steckplatz 2a streichen würde und der Kühlkörper 4 keine oder bzw. eine ungenügende Durchströmung erfahren würde. Der Kühlkörper 4 ist in der Darstellung gemäß Figur 1 nur symbolisch dargestellt, jedoch tatsächlich in der Regel so wie der Kühlkörper 7 aufgebaut, so dass er von der Kühlluft durchströmt werden kann.

Figur 3 zeigt den CPU-Dummy in einer Schrägansicht.

Der CPU-Dummy ist als Kunststoffspritzgussteil hergestellt und weist eine Bodenwandung 12, eine Mittelwand 13 sowie zwei Seitenwandungen 14a und 14b auf. In der Mittelwand 13 sind vier Durchbrüche 15 vorgesehen, damit ein gewisser Anteil an Luft durch den CPU-Dummy strömen kann und dieser somit einem dem Kühlkörper 4 äquivalenten Strömungswiderstand darstellt. Die Durchbrüche 15 sind in der Mittelwand 13 symmetrisch angeordnet sowie auch der gesamte CPU-Dummy ist spiegelsymmetrisch aufgebaut, so dass dieser auch um 180° gedreht in den Prozessorsteckplatz 2a bzw. 2b eingesteckt werden kann.

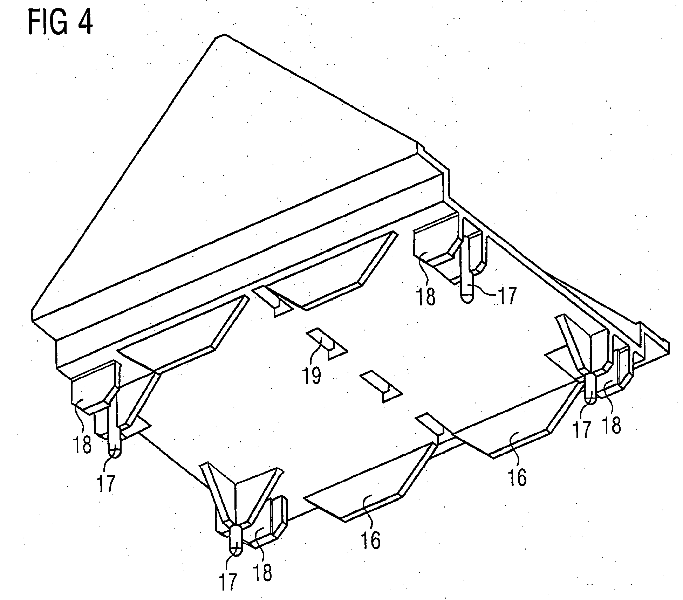

Figur 4 zeigt den CPU-Dummy gemäß Figur 3 in einer Schrägansicht von unten.

An der Unterseite sind seitliche Führungsrippen 16 vorgesehen, welche zum einen die Montage erleichtern und zum anderen zum Schutz des CPU-Sockels bzw. der Steckplätze 2a, 2b vorgesehen sind. Für die Montage des CPU-Dummys 5 im Motherboard 1 sind an der Unterseite sogenannte Zentrierbolzen 17 vorgesehen, durch welche der CPU-Dummy lediglich in den Steckplatz 2a, 2b eingesteckt werden muss.

Seitlich der Zentrierbolzen 17 sind als Rastvorrichtungen sogenannte Schnapper 18 ausgebildet, welche eine formschlüssige Festlegung des CPU-Dummys ohne Schrauben erlauben.

Der CPU-Dummy ist kompatibel zum Intel CEK (Common Enabling Kit) ausgebildet, so dass die Schnapper 18 das gleiche Wiederlager nutzen können, welches auch zur Festlegung des CEK dient.

In der Bodenwandung 12 sind an den Stellen der Durchbrüche 15 Durchbrüche 19 vorgesehen, welche spritzgusstechnisch eine leichtere Fertigung der Durchbrüche 15 erlauben.

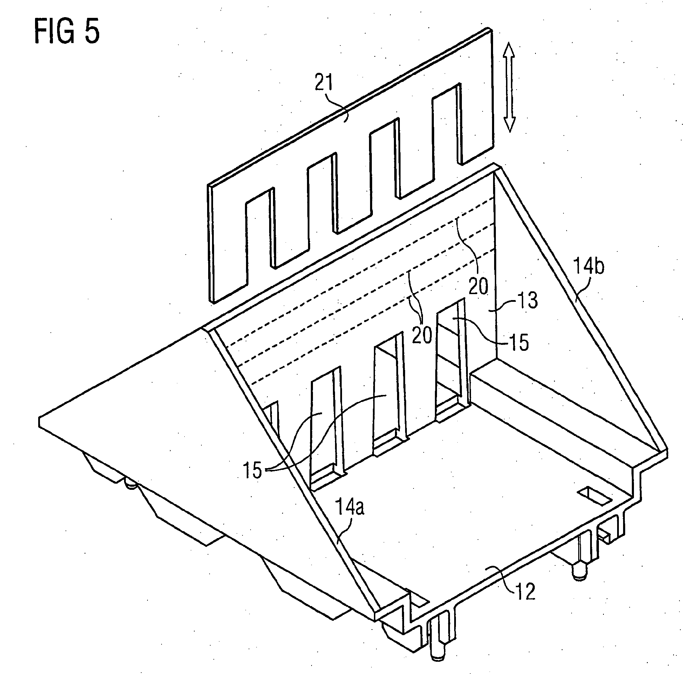

Figur 5 zeigt die Darstellung gemäß Figur 3, wobei hier die Mittelwand 13 in der Höhe variabel ausgebildet ist. Figur 5 zeigt in einer Zeichnung mehrere Varianten. Z.B. können in der Mittelwand 13 Sollbruchstellen oder Knickstellen 20 ausgeführt sein, welche erlauben, die Mittelwand 13 entweder durch Herausbrechen einzelner Teile oder durch Umknicken in der Höhe einzustellen. Bei der Ausbildung mit Sollknickstellen 20 sind zu den Seitenwänden 14a und 14b auf alle Fälle auch Sollbruchstellen vorgesehen, um die Mittelwand entlang der Linien so knicken zu können.

Alternativ kann auch ein Schieber 21 an der Mittelwand 13 ausgebildet sein, welcher seitlich zu den Innenseiten der Seitenwandungen 14a und 14b mittels Rastvorrichtungen aufgenommen ist, die eine stufenlose Einstellung in der Höhe erlauben. Diese Rastvorrichtungen können z.B. lediglich durch eine gerippte Ausbildung des Kunststoffs in diesem Bereich ausgebildet sein.

Durch die Höheneinstellung des Schiebers 21 kann somit der CPU-Dummy exakt an die Höhe der ansonsten in dem Computersystem eingesetzten Kühlkörper angepasst werden.

Die Erfindung ist nicht auf das dargestellte Ausführungsbeispiel beschränkt, sondern erstreckt sich auf alle sogenannten CPU-Dummys, welche als Strömungsersatz in Steckplätze für Prozessoren eingesteckt werden können, um einen äquivalenten Strömungswiderstand wie ein eingesteckter Prozessor mit darauf angeordneten Kühlkörper zu erzeugen.

### Bezugszeichenliste

- 1: Motherboard
- 2a, 2b: Steckplätze
- 3: Prozessor
- 4: Kühlkörper
- 5: CPU-Dummy
- 6: Einschub
- 7: weiterer Kühlkörper
- 8: Luftleithaube
- 9: Öffnung
- 10: Öffnung
- 11: Gitter
- 12: Bodenwand
- 13: Mittelwand
- 14a, 14b: Seitenwandung
- 15: Durchbrüche
- 16: Führungsrippen
- 17: Zentrierbolzen
- 18: Schnapper
- 19: Durchbrüche
- 20: Sollbruch/Knickstellen
- 21: Schieber

## Patentansprüche

1. Computersystem mit Steckplätzen (2a, 2b) für Prozessoren (3), auf denen jeweils Kühlkörper (4) angeordnet sind,
**dadurch gekennzeichnet, dass**
in diejenige Steckplätze (2a), in die kein Prozessor mit darauf angeordneten Kühlkörper eingesteckt ist, ein CPU-Dummy (5) eingesteckt ist, welcher für die Kühlluftströmung eine im Vergleich zum Prozessor (3) mit Kühlkörper (4) äquivalenten Strömungswiderstand darstellt.

2. Computersystem nach Anspruch 1,
**dadurch gekennzeichnet, dass**
der CPU-Dummy (5) so ausgebildet ist, dass er im eingesteckten Zustand einen im Steckplatz (2a) angeordneten CPU-Sockel abdeckt und vor Beschädigung und Verschmutzung schützt.

3. Computersystem nach einem der Ansprüche 1 oder 2,
**dadurch gekennzeichnet, dass**
der CPU-Dummy (5) mechanisch voll kompatibel zu einem ansonsten für den Steckplatz vorgesehenen Prozessor (3) mit Kühlkörper (5) ist.

4. Computersystem nach einem der Ansprüche 1 bis 3,
**dadurch gekennzeichnet, dass**
der CPU-Dummy schraubenlos montierbar ist.

5. Computersystem nach einem der Ansprüche 1 bis 4,
**dadurch gekennzeichnet, dass**
der CPU-Dummy spiegelsymmetrisch aufgebaut ist.

6. Computersystem nach einem der Ansprüche 1 bis 5,
**dadurch gekennzeichnet, dass**
der CPU-Dummy zerstörungsfrei montiert und demontiert werden kann.

7. Computersystem nach einem der Ansprüche 1 bis 6,
**dadurch gekennzeichnet, dass**
der CPU-Dummy (5) eine Mittelwand (13) aufweist, die in
der Höhe einstellbar ist.

8. Computersystem nach Anspruch 7,
**dadurch gekennzeichnet, dass**
die Mittelwand Sollbruch- bzw. Sollknickstellen (20) aufweist und durch Herausbrechen oder Umknicken in der Höhe einstellbar ist.

9. Computersystem nach Anspruch 7,
**dadurch gekennzeichnet, dass**
die Mittelwand (13) einen Schieber (21) aufweist und durch den Schieber (21) in der Höhe einstellbar ist.

10. Computersystem nach einem der Ansprüche 1 bis 10,
**dadurch gekennzeichnet, dass**
der CPU-Dummy (5) an der Unterseite Zentrierbolzen (11)
und Schnapper (18) aufweist und **dadurch** lediglich durch Stecken montierbar ist.

11. Computersystem nach einem der Ansprüche 1 bis 11,
**dadurch gekennzeichnet, dass**
der CPU-Dummy (5) an der Unterseite seitliche Führungsrippen aufweist, welche zusammen mit einer Bodenwandung (12) des CPU-Dummys den Schutz für den im Steckplatz integrierten CPU-Sockel darstellen.
